(19) Europäisches Patentamt / European Patent Office / Office européen des brevets

(11) **EP 3 794 724 B1**

(12) **EUROPÄISCHE PATENTSCHRIFT**

(45) Veröffentlichungstag und Bekanntmachung des Hinweises auf die Patenterteilung:
**13.09.2023 Patentblatt 2023/37**

(21) Anmeldenummer: **19722901.6**

(22) Anmeldetag: **09.05.2019**

(51) Internationale Patentklassifikation (IPC):
**H02P 29/60** (2016.01)   **H02P 29/66** (2016.01)

(52) Gemeinsame Patentklassifikation (CPC):
**H02P 29/67; H02P 29/662**

(86) Internationale Anmeldenummer:
**PCT/EP2019/061931**

(87) Internationale Veröffentlichungsnummer:
**WO 2019/219501 (21.11.2019 Gazette 2019/47)**

(54) **VERFAHREN ZUM BETREIBEN EINES STROMRICHTERS, STROMRICHTER FÜR EINE PERMANENTERREGTE ELEKTRISCHE MASCHINE, FAHRZEUG UND COMPUTERPROGRAMMPRODUKT**

METHOD FOR OPERATING A POWER CONVERTER, POWER CONVERTER FOR A PERMANENTLY EXCITED ELECTRIC MACHINE, VEHICLE AND COMPUTER PROGRAM PRODUCT

PROCÉDÉ DESTINÉ À FAIRE FONCTIONNER UN CONVERTISSEUR, CONVERTISSEUR POUR UNE MACHINE ÉLECTRIQUE À EXCITATION PERMANENTE, VÉHICULE ET PROGICIEL INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2018 DE 102018112107**

(43) Veröffentlichungstag der Anmeldung:
**24.03.2021 Patentblatt 2021/12**

(73) Patentinhaber: **Valeo eAutomotive Germany GmbH**
**91056 Erlangen (DE)**

(72) Erfinder: **SEILMEIER, Markus**
**90765 Fürth (DE)**

(56) Entgegenhaltungen:
**DE-A1- 3 736 303    DE-A1-102015 005 555**

• **ANDREAS SPECHT ET AL: "Determination of rotor temperature for an interior permanent magnet synchronous machine using a precise flux observer", 2014 INTERNATIONAL POWER ELECTRONICS CONFERENCE (IPEC-HIROSHIMA 2014, ECCE ASIA), 1. Mai 2014 (2014-05-01), Seiten 1501-1507, XP055601878, DOI: 10.1109/IPEC.2014.6869784 ISBN: 978-1-4799-2705-0**

EP 3 794 724 B1

**Beschreibung**

Verfahren zum Betreiben eines Stromrichters, Stromrichter für eine permanenterregte elektrische Maschine, Fahrzeug und Computerprogrammprodukt Die vorliegende Erfindung betrifft ein Verfahren zum Betreiben eines Stromrichters für eine permanenterregte elektrische Maschine. Daneben betrifft die Erfindung einen Stromrichter für eine permanenterregte elektrische Maschine, ein Fahrzeug und ein Computerprogrammprodukt.

Die DE 37 363 03 A1 offenbart eine Einrichtung zur Ermittlung der Temperatur eines bürstenlosen Gleichstrommotors mit einem permanentmagnetischen Rotor und einer wenigstens dreiphasigen Wicklung mit elektronischer Kommutierung. Die in eine Wicklung induzierte EMK wird einem Integrierglied zugeführt. Eine Steuereinrichtung startet im Zeitpunkt des Null-Durchgangs der EMK die Integration und stoppt zu Beginn des nachfolgenden Kommutierungssignals die Integration. Eine nachfolgende Schaltung speichert das Integral der EMK innerhalb des Messzeitraums ab, wobei das abgespeicherte Signal ein temperaturproportionales Signal darstellt.

Der Artikel von Specht, Andreas et al.: "Determination of rotor temperature for an interior permanent magnet synchronous machine using a precise flux oberserver", 2014 International Power Electronics Conference (IPEC-Hiroshima 2014, ECCE ASIA), Seite 1501-1507 (XP055601878), offenbart ein Verfahren zur Ermittlung einer Rotortemperatur.

Die DE 10 2014 109 677 A offenbart ein Verfahren zur Bestimmung der Temperatur des Permanentmagnets einer elektrischen Maschine aus einem gemessenen d-Achsenstrom, wobei die Steuerung dafür zwei verschieden schnelle Zeitscheiben benutzt.

Die Berücksichtigung einer Temperatur eines Permanentmagneten bei der Steuerung einer elektrischen Maschine ermöglicht einerseits eine hohe Drehmomentgenauigkeit, da der magnetische Fluss des Permanentmagneten signifikant von seiner Temperatur abhängig ist, und andererseits einen Schutz vor einer irreversiblen Demagnetisierung des Permanentmagneten, wenn dessen Curie-Temperatur überschritten wird. Gegenüber eher ungenauen, auf einem thermischen Netzwerk beruhenden Techniken werden zur Temperaturermittlung Verfahren bevorzugt, welche die Temperatur mittels eines Beobachters auf Basis der gegenelektromotorischen Kraft der elektrischen Maschine schätzen.

Aus der Druckschrift DE 10 2015 005 555 A1 ist ein solches Verfahren zur Bestimmung einer Magnettemperatur einer permanenterregten elektrischen Maschine bekannt, wobei einer Magnettemperaturbeobachtereinheit ein gemessener Statorstrom der Maschine, eine in einem Umrichter der Maschine gebildete Statorspannung und eine gemessene Drehzahl der Maschine zugeführt werden. Die Magnettemperaturbeobachtereinheit ermittelt aus einer Flussdifferenz zwischen einem ermittelten Permanentmagnetfluss und einer Referenzmagnettemperatur eine Temperaturdifferenz und aus dieser die Magnettemperatur.

Herkömmliche Implementierungen eines solchen Verfahrens sind jedoch sehr rechenaufwendig, da der Beobachter die Schätzung sehr häufig auf Basis momentan erfasster Parameterwerte ausführen muss.

Der Erfindung liegt mithin die Aufgabe zugrunde, eine effiziente Implementierung einer Ermittlung einer Temperaturinformation mittels eines Beobachters anzugeben.

Diese Aufgabe wird erfindungsgemäß gelöst durch ein Verfahren gemäß Anspruch 1. Vorteilhafte Ausgestaltungen sind Gegenstand der abhängigen Ansprüche.

Die Erfindung beruht auf der Erkenntnis, dass eine Berechnung der Temperatur durch den Beobachter in der ersten Zeitscheibe die Rechenressourcen der Recheneinrichtung sehr stark ausnutzt. Die Erfindung schlägt daher vor, den Ressourcenverbrauch der Recheneinrichtung dadurch zu reduzieren, dass der rechnerisch aufwendige Prozess, der die Temperaturinformation durch den Beobachter ermittelt, in der selteneren zweiten Zeitscheibe erfolgt und lediglich das ressourcenschonende Erfassen der Parameterwerte in der häufigen ersten Zeitscheibe ausgeführt wird. Das erfindungsgemäße Verfahren ermöglicht vorteilhafterweise eine besonders effiziente Implementierung der Ermittlung der Temperaturinformation, da das Schätzproblem in einen schnellen, in der ersten Zeitscheibe zu verarbeitenden Teil und in einen langsamen, in der zweiten Zeitscheibe zu verarbeitenden Teil aufgeteilt wird.

Typischerweise wird ein Beobachter verwendet, der die Temperatur des Permanentmagneten basierend auf einer gegenelektromotorischen Kraft (Back-EMF) der elektrischen Maschine schätzt. Die Temperatur bezieht sich insbesondere auf einen Mittelwert einer Temperaturverteilung des oder der Permanentmagneten der elektrischen Maschine. Zweckmäßigerweise beschreiben die Betriebsparameter eine Drehzahl der elektrischen Maschine und/oder einen Ist-Ausgangsstrom des Stromrichters und/oder einen zur Steuerung des Stromrichters vorgegebenen Soll-Strom und/oder eine Ausgangsspannung des Stromrichters. Bevorzugt sind der Ist-Ausgangsstrom bzw. der Soll-Strom bzw. die Ausgangsspannung in dq-Koordinaten beschrieben. Die Parameterwerte können dazu im Rahmen des erfindungsgemäßen Verfahrens in ein dq-Koordinatensystem transformiert werden. Bevorzugt entspricht eine Aufruffrequenz der ersten Zeitscheibe einer Taktfrequenz des Stromrichters. Im Sinne der Erfindung beschreibt der Begriff "Prozess" eine Gesamtheit von Rechenaufgaben bzw. Teilprozessen, die während einer Zeitscheibe durchgeführt werden.

Bevorzugterweise werden bei dem erfindungsgemäßen Verfahren durch den ersten Prozess auch getaktete Schaltsignale für die Steuerung des Stromrichters erzeugt. Die erste Zeitscheibe kann daher auch als Steuerzeitscheibe aufgefasst werden. Das Erfassen der Parameterwerte kann folglich rechentechnisch in die ohnehin vorgesehene erste Zeitscheibe, die insbesondere Tastverhältnisse der getakteten Schaltsignale ermittelt, integriert werden, da die reine Erfassung der Parameterwerte äußerst ressourcenschonend verarbeitet werden kann.

Erfindungsgemäß werden die Parameterwerte über eine Dauer eines Erfassungsdurchgangs, der eine oder mehrere elektrische oder mechanische Perioden der elektrischen Maschine umfasst, erfasst.

Es ist dabei besonders vorteilhaft, dass Mittelwerte der Parameterwerte über die Dauer des Erfassungsdurchgangs zur Ermittlung der Betriebsparameter berechnet werden. Dazu können im ersten Prozess akkumulierte Abtastwerte als Parameterwerte ermittelt und gespeichert werden. Das Berechnen der Mittelwerte, insbesondere aus den akkumulierten Abtastwerten, erfolgt zweckmäßigerweise durch den zweiten Prozess oder durch einen in einer Zeitscheibe, die seltener als die erste Zeitscheibe aufgerufen wird, durchgeführten Prozess.

Die Verwendung von Mittelwerten zur Ermittlung der Betriebsparameter oder als Betriebsparameter hat den Vorteil, dass dadurch Harmonische und Unterharmonische, die beispielsweise durch Statornutungen oder magnetische Sättigung entstehen, eliminiert werden. Normalerweise müssten diese Harmonischen durch lageabhängige Modellparameter im Beobachter berücksichtigt werden, weswegen rechenintensive trigonometrische Funktionen in Abhängigkeit von Vielfachen des aktuellen Rotorlagewinkels, beispielsweise der sechsten Harmonischen bezogen auf dq-Koordinaten, ausgeführt werden müssten. Herkömmliche Verfahren behelfen sich damit, eine sehr langsame Dynamik des Beobachters zu verwenden, was jedoch zu unerwünschten Oszillationen der geschätzten Temperatur führen kann, wenn die Dynamik nicht langsam genug ist. Die Mittelwertbildung ermöglicht es hingegen, die Harmonischen bereits auf der Ebene der Betriebsparameterermittlung zu eliminieren und verbessert das erfindungsgemäße Verfahren damit weiter.

Erfindungsgemäß ist ferner vorgesehen, dass die Parameterwerte nur dann zur Ermittlung der Betriebsparameter verwendet werden, wenn ein Validierungskriterium, das das Vorliegen eines quasistationären Betriebs der elektrischen Maschine beschreibt, erfüllt ist und bei Nichterfüllung des Validierungskriteriums ein neuer Erfassungsdurchgang durchgeführt wird. Dadurch wird insbesondere sichergestellt werden, dass die Bedingung des quasistationären Betriebs für die Gültigkeit der Berücksichtigung von Mittelwerten erfüllt ist. Ein quasistationärer Betrieb kann angenommen werden, weil die thermische Zeitkonstante eines Rotors der elektrischen Maschine typischerweise in der Größenordnung von Minuten liegt und daher sehr langsam im Vergleich zur elektrischen Dynamik des Stromrichters ist. Es ist daher ausreichend, die Schätzung vergleichsweise langsam unter quasistationären Bedingungen durchzuführen.

Das Validierungskriterium kann eine Bedingung, dass eine Änderung von Soll-Strömen des Stromrichters innerhalb eines vorgegebenen Bereichs liegt, und/oder eine Bedingung, dass eine Änderung einer Drehzahl der elektrischen Maschine in einem vorgegebenen Bereich liegt, umfassen. Dadurch kann sichergestellt werden, dass keine Mittelwerte verwendet werden, die auf Parameterwerten beruhen, die während einer relevanten Änderung der Soll-Ströme bzw. der Drehzahl erfasst wurden. Eine solche Situation ist beispielsweise das unerwartete Beschleunigen eines Fahrzeugs, das von der elektrischen Maschine angetrieben wird, durch einen Fahrer. Um das Validierungskriterium bzw. seine Bedingungen auszuwerten, kann durch den ersten Prozess zusätzlich ein Minimalwert und/oder ein Maximalwert der Parameterwerte ermittelt und gespeichert werden, was - wie die zuvor erwähnte Akkumulierung der Parameterwerte - keine nennenswerte zusätzliche Belastung der Rechenressourcen darstellt. Das Auswerten des Validierungskriteriums erfolgt bevorzugt durch den zweiten Prozess oder durch einen in einer Zeitscheibe, die seltener als die erste Zeitscheibe aufgerufen wird, durchgeführten Prozess.

Es ist zweckmäßigerweise im Rahmen des erfindungsgemäßen Verfahrens vorgesehen, dass das Erfassen der Parameterwerte durch eine Triggerinformation gestartet wird, die nur dann bereitgestellt wird, wenn eine Startinformation vorliegt, die anzeigt, dass eine Drehzahl der elektrische Maschine größer oder gleich einem vorgegebenen Schwellwert ist, und/oder das Ermitteln der Betriebsparameter durch eine Triggerinformation gestartet wird, die nur dann bereitgestellt wird, wenn der erste Prozess eine Fertiginformation bereitstellt, und/oder das Ermitteln der Temperaturinformation durch eine Triggerinformation gestartet wird, die nur dann bereitgestellt wird, wenn der Prozess, durch den die Betriebsparameter berechnet werden, eine Validierungsinformation bereitstellt.

Eine besonders effiziente Implementierung dieser übergeordneten Prozesssteuerung wird erreicht, wenn der die Triggerinformation oder die Triggerinformationen erzeugende Prozess einen Zustandsautomaten realisiert, der die Startinformation und/oder die Fertiginformation und/oder die Validierungsinformation als Eingangsaktion erhält. Vorteilhafterweise wird das Erzeugen der Triggerinformation oder der Triggerinformationen durch den zweiten Prozess oder durch einen in einer Zeitscheibe, die seltener als die erste Zeitscheibe aufgerufen wird, durchgeführten Prozess gesteuert.

Um eine Veränderung von Induktivitäten während des Betriebs der elektrischen Maschine zu berücksichtigen, kann ferner beim Ermitteln der Temperaturinformation eine zu einer Referenztemperatur zu addierende Temperaturdifferenz in Abhängigkeit eines Betriebsparameters, insbesondere von Ist-Ausgangsströmen des Stromrichters, aus einer magnetischen Flussdifferenz ermittelt werden. Da eine durch eine Temperaturänderung hervorgerufene Flussänderung, die ihrerseits eine Veränderung der Induktivitäten bewirkt, den Arbeitspunkt der elektrischen Maschine verändert, kann durch die Berücksichtigung des Betriebsparameters eine im Vergleich zu herkömmlichen Verfahren höhere Genauigkeit der Temperaturschätzung erfolgen. Dies gilt insbesondere bei hochgesättigten elektrischen Maschinen für automobile Anwendungen. Die Temperaturdifferenz kann dabei ein Glied erster Ordnung einer Taylorreihenentwicklung der geschätzten Temperatur der Permanentmagneten beschreiben. Bevorzugt wird die Temperaturdifferenz mittels einer Lookup-Tabelle, welche Werten des Betriebsparameters Temperaturdifferenzwerte zuordnet, oder mittels einer mathematischen Rechenvorschrift, bevorzugt eines Polynoms, welche den Betriebsparameter als Veränderliche aufweist, ermittelt.

Daneben betrifft die Erfindung einen Stromrichter für eine permanenterregte elektrische Maschine, umfassend eine Recheneinrichtung, die zum Durchführen des erfindungsgemäßen Verfahrens eingerichtet ist.

Die Erfindung betrifft ferner ein Fahrzeug, umfassend eine permanenterregte elektrische Maschine zum Antreiben des Fahrzeugs und den erfindungsgemäßen Stromrichter, der zum Versorgen der elektrischen Maschine eingerichtet ist.

Schließlich betrifft die Erfindung ein Computerprogramm zum Laden in einen Speicher einer Recheneinrichtung, umfassend Softwarecode, mit dem das erfindungsgemäße Verfahren durchgeführt wird, wenn das Computerprogramm auf der Recheneinrichtung ausgeführt wird. Das Computerprogrammprodukt kann insbesondere in die Recheneinrichtung des erfindungsgemäßen Stromrichters geladen sein.

Alle Ausführungen zum erfindungsgemäßen Verfahren lassen sich analog auf den erfindungsgemäßen Stromrichter, das erfindungsgemäße Fahrzeug und das erfindungsgemäße Computerprogramm übertragen, sodass die vorgenannten Vorteile auch mit diesen erzielt werden können.

Weitere Vorteile und Einzelheiten der vorliegenden Erfindung ergeben sich aus den im folgenden beschriebenen Zeichnungen. Diese sind schematische Darstellungen und zeigen:

Fig. 1    eine Prinzipskizze eines Ausführungsbeispiels des erfindungsgemäßen Fahrzeugs mit einem Ausführungsbeispiel des erfindungsgemäßen Stromrichters;

Fig. 2    ein Flussdiagramm eines Ausführungsbeispiels des erfindungsgemäßen Verfahrens;

Fig. 3    ein Prozessdiagramm von während des Verfahrens ausführten Prozessen; und

Fig. 4    ein Blockschaltbild eines während des Verfahrens verwendeten Beobachters.

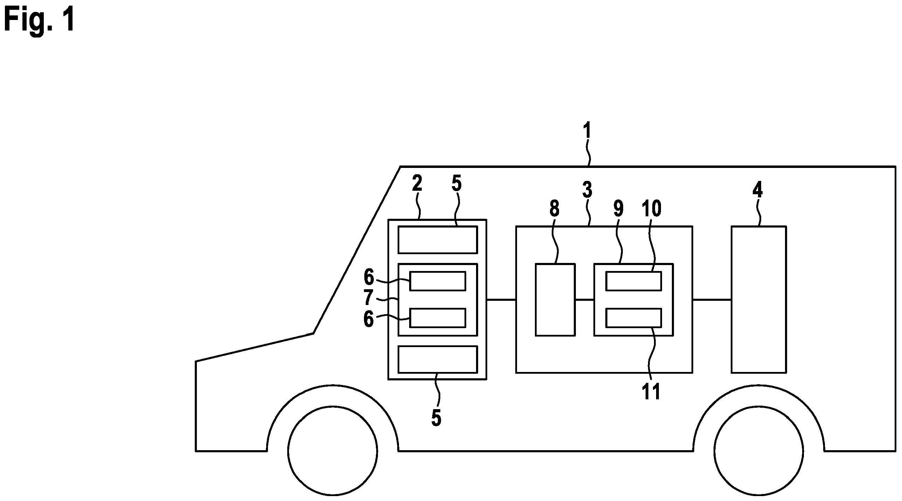

Fig. 1 ist eine Prinzipskizze eines Ausführungsbeispiels eines Fahrzeugs 1, beispielsweise eines Hybridfahrzeugs oder eines Elektrofahrzeugs, umfassend eine permanenterregte elektrische Maschine 2 zum Antreiben des Fahrzeugs 1, ein Ausführungsbeispiel eines Stromrichters 3, der zum Versorgen der elektrischen Maschine eingerichtet ist, und eine Hochvoltbatterie 4. Die elektrische Maschine umfasst einen Stator 5 und einen einen oder mehrere Permanentmagneten 6 aufweisenden Rotor 7.

Der Stromrichter 3 weist eine Leistungseinheit 8 auf, die dazu eingerichtet ist, eine von der Hochvoltbatterie 4 bereitgestellte Gleichspannung in eine mehrphasige Wechselspannung, die der elektrischen Maschine 2 zugeführt wird, zu wandeln. Die Leistungseinheit 8 wird von einer Recheneinrichtung 9 gesteuert, die beispielsweise durch einen Mikrocontroller realisiert ist. Die Recheneinrichtung 9 weist eine zentrale Recheneinheit 10, die mit einem Echtzeitbetriebssystem betrieben wird, und einen Speicher 11 auf. Die Recheneinrichtung 9 verarbeitet Prozesse eines in den Speicher 11 geladenen Computerprogramms in mehreren Zeitscheiben verschiedener Aufruffrequenz bzw. -häufigkeit. Dadurch ist die Recheneinrichtung 9 dazu eingerichtet, ein Verfahren zum Betreiben des Stromrichters 3 nach einem der folgenden Ausführungsbeispiele durchzuführen:

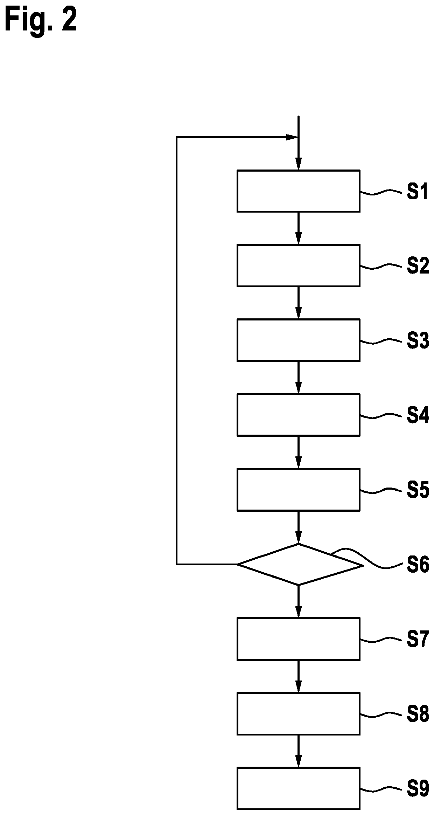

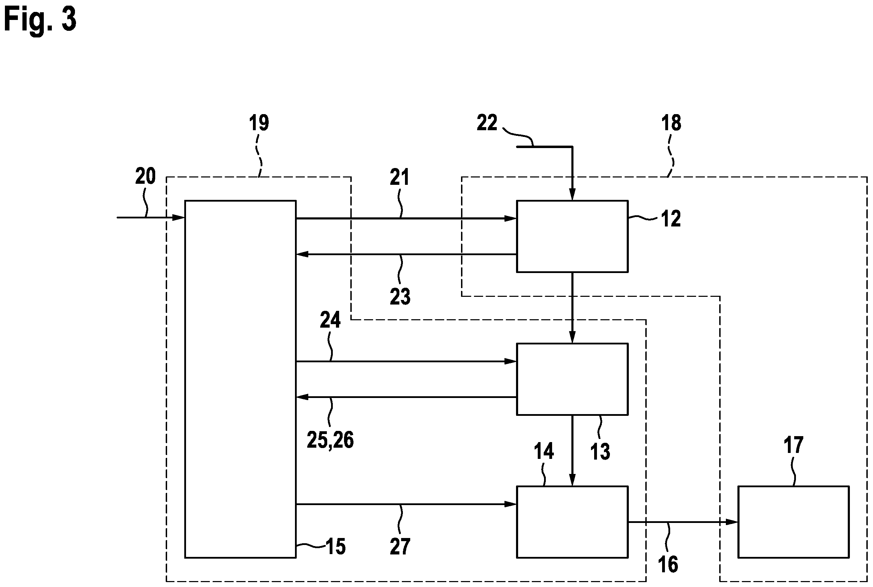

Fig. 2 ist ein Blockschaltbild eines Ausführungsbeispiels des Verfahrens zum Betreiben des Stromrichters 3. Im Rahmen des Verfahrens erfolgt eine Steuerung mehrerer Rechenanweisungen bzw. Teilprozesse 12, 13, 14 durch einen übergeordneten Teilprozess 15, welche in dem in Fig. 3 gezeigten Prozessdiagramm dargestellt sind.

Das Verfahren dient dazu, eine Temperaturinformation 16, die einen Mittelwert der Temperaturverteilung der Permanentmagnete 6 beschreibt, zu ermitteln und den Stromrichter 3 in Abhängigkeit der Temperaturinformation 16 zu steuern. Diese Steuerung erfolgt in einem weiteren Teilprozess 17. Nur die Teilprozesse 12, 17 werden durch einen ersten Prozess 18 in einer ersten Zeitscheibe, deren Aufruffrequenz der Taktfrequenz des Stromrichters 3 entspricht, durchgeführt. Bei einer Taktfrequenz von 10 kHz wird der erste Prozess 18 beispielsweise alle 100 μs aufgerufen. Die Teilprozesse 13, 14, 15 werden hingegen in durch einen zweiten Prozess 19 in einer zweiten Zeitscheibe, die seltener als die erste Zeitscheibe, z. B. alle 10 ms, aufgerufen wird, durchgeführt.

In einem Schritt S1 erhält der übergeordnete Teilprozess 15 eine Startinformationen 20 als Eingangsaktion, die anzeigt, dass eine Drehzahl der elektrischen Maschine 2 größer oder gleich einem vorgegebenen Schwellwert ist, und gibt daraufhin eine Triggerinformation 21 aus. Erst mit dem Erreichen oder Überschreiten dieses Schwellwert lässt sich die Temperaturinformation sinnvoll ermitteln. Dazu realisiert der Teilprozess 15 einen Zustandsautomaten.

In einem anschließenden Schritt S2 wird durch das Vorliegen der Triggerinformation 21 der Teilprozess 12 zum Erfassen von Parameterwerten 22 gestartet, der in der ersten Zeitscheibe durchgeführt wird. Die Erfassung erfolgt dabei über die Dauer eines Erfassungsdurchgangs, der eine oder mehrere elektrische oder mechanische Perioden der elektrischen Maschine 2 umfasst. Während dieses Erfassungsdurchgangs akkumuliert der Teilprozess 12 Abtastwerte als Parameterwerte 22 für die Ermittlung von Betriebsparametern, die eine Drehzahl der elektrischen Maschine 2, einen Ist-Ausgangsstrom des Stromrichters 3, einen zur Steuerung des Stromrichters 3 vorgegebenen Soll-Strom und eine Ausgangsspannung des Stromrichters 3 beschreiben. Daneben ermittelt der Teilprozess 12 Minimal- und Maximalwerte der Parameterwerte 22 für die Ermittlung eines jeweiligen Betriebsparameters. Die akkumulierten Abtast- bzw. Parameterwerte 22 sowie die Minimal- und Maximalwerte werden im Speicher 11 gespeichert.

In einem anschließenden Schritt S3 gibt der Teilprozess 12 eine Fertiginformation 23, die eine Eingangsaktion des Zustandsautomaten bildet, an den Teilprozess 15 aus. Bei Vorliegen der Fertiginformation 23 gibt der Teilprozess 15 eine weitere Triggerinformation 24 aus.

Durch das Vorliegen der Triggerinformation 24 wird der Teilprozess 13 zum Ermitteln der Betriebsparameter, der in der zweiten Zeitscheibe ausgeführt wird, in einem Schritt S4 gestartet. Zum Ermitteln der Betriebsparameter wird zunächst ein Mittelwert der Parameterwerte 22 über die Dauer des Erfassungsdurchgangs berechnet, indem die aus dem Speicher 11 abgerufenen akkumulierten Parameterwerte 22 durch die Anzahl von Abtastungen geteilt werden.

In einem anschließenden Schritt S5 wertet der Teilprozess 13 ein Validierungskriterium aus, das einen quasistationären Betrieb der elektrischen Maschine 2 beschreibt. Das Validierungskriterium umfasst eine Bedingung, dass eine Änderung der Soll-Ströme des Stromrichters 3 innerhalb eines vorgegebenen Bereichs liegt, und eine Bedingung, dass eine Änderung der Drehzahl der elektrischen Maschine in einem vorgegebenen Bereich liegt. Dazu vergleicht der Teilprozess 13 die ebenfalls aus dem Speicher 11 abgerufenen Minimal- und Maximalwerte mit vorgegebenen Schwellwerten.

In einem Schritt S6 prüft der Teilprozess 13, ob das Validierungskriterium erfüllt ist. Ist dies nicht der Fall, wird eine negative Validierungsinformation 25 als Eingangsaktion für den Zustandsautomaten ausgegeben. Dieser erzeugt daraufhin - gegebenenfalls verzögert - eine neue Triggerinformation 21, die einen erneuten Erfassungsdurchgang durch den Teilprozess 12 auslöst. Das Verfahren weist einen entsprechenden Rücksprung in den Schritt S2 auf.

Ergibt die Prüfung im Teilprozess 13 hingegen, dass das Validierungskriterium erfüllt ist, so werden die Mittelwerte als Betriebsparameter im Speicher 11 gespeichert und eine positives Validierungsinformation 26 als Eingangsaktion an den übergeordneten Teilprozess 15 ausgegeben. Dieser erzeugt daraufhin in einem Schritt S7 eine weitere Triggerinformation 27 für den Teilprozess 14.

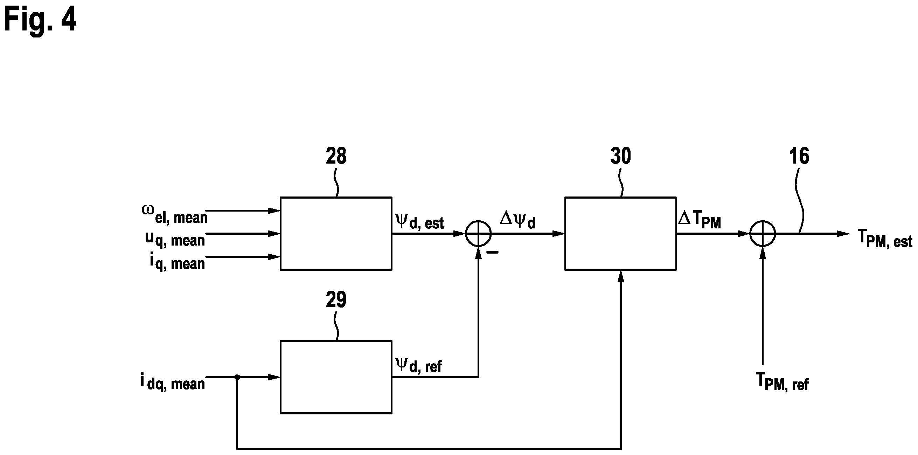

Bei Vorliegen der Triggerinformation 27 wird in einem Schritt S8 der Teilprozess 14 zum Ermitteln der Temperaturinformation 16, welcher in der zweiten Zeitscheibe durchgeführt wird, gestartet. Der Prozess 14 realisiert einen Beobachter, der in Fig. 4 im Detail gezeigt ist.

Dazu umfasst der Teilprozess 14 einen Unterprozess 28, der die Betriebsparameter, welche eine gemittelte Drehzahl $\omega_{el,mean}$, eine gemittelte q-Komponente der Soll- oder Ausgangsspannung $u_{q,mean}$ und eine gemittelte q-Komponente des Ist-Ausgangsstroms $i_{q,mean}$ umfassen, aus dem Speicher 11 abruft. Basierend auf der stationären Spannungsgleichung der elektrischen Maschine 2

$$u_q = R_q \cdot i_q + \omega_{el} \cdot \Psi_d$$

ermittelt der Unterprozess 28 eine d-Komponente des geschätzten magnetischen Flusses

$$\Psi_{d,est} = \frac{u_{q,mean} - R_q \cdot i_{q,mean}}{\omega_{el,mean}}.$$

Dabei beschreibt $R_q$ einen in der q-Achse wirksamen mittleren Wicklungswiderstand, welcher sich im Allgemeinen aus einer ohmschen Gleichspannungskomponente und einer zusätzlichen frequenzabhängigen Komponente, welche Zusatzverluste durch den Skineffekt und den Proximityeffekt beschreibt, zusammensetzt. Die Gleichspannungskomponente wird über einen Temperaturkoeffizienten des Leitermaterials und eine gemessene Wicklungstemperatur adaptiert.

Ein weiterer Unterprozess 29 des Teilprozesses 14 ermittelt mithilfe einer Lookup-Tabelle eine d-Komponente eines magnetischen Referenzfluss $\Psi_{d,ref}$ aus gemittelten dq-Komponenten des Ist-Ausgangsstroms $i_{dq,mean}$ für eine vorgegebene Referenztemperatur $T_{PM,ref}$ der Permanentmagneten 6. Dabei ergibt sich aus der Differenz der d-Komponenten des geschätzten magnetischen Flusses $\Psi_{d,est}$ und des magnetisches Referenzfluss $\Psi_{d,ref}$ eine d-Komponente einer magnetischen Flussdifferenz $\Delta\Psi_d$.

Ein nächster Unterprozess 30 des Teilprozesses 14 ermittelt mithilfe einer Lookup-Tabelle aus der magnetischen Flussdifferenz $\Delta\Psi_d$ und den gemittelten dq-Komponenten des Ist-Ausgangsstroms $i_{dq,mean}$ eine Temperaturdifferenz $\Delta T_{PM}$, die addiert zur Referenztemperatur $T_{PM,ref}$ die geschätzte Temperatur $T_{PM,est}$ des Permanentmagneten 6 als Temperaturinformation 16 ergibt.

Die Ermittlung der geschätzten Temperatur $T_{PM,est}$ basiert auf folgender Taylorreihenentwicklung:

$$T_{PM,est} = T_{PM,ref} + \frac{\partial T_{PM}}{\partial \Psi_d}\left(\Psi_{d,est} - \Psi_{d,ref}\right) + \frac{1}{2}\frac{\partial^2 T_{PM}}{\partial \Psi_d^2}\left(\Psi_{d,est} - \Psi_{d,ref}\right)^2 + \cdots$$

Die d-Komponente des magnetisches Referenzfluss $\Psi_{d,ref}$ beschreibt mithin die Grundwelle des Flusses bei der Referenztemperatur $T_{PM,ref}$. Für die hier beschriebene Implementierung ist es grundsätzlich ausreichend, nur die Ableitung erster Ordnung für die Schätzung zu berücksichtigen. Die Ableitung erster Ordnung ist grundsätzlich eine Funktion der dq-Komponenten des Ist-Ausgangsstroms $i_{dq}$, was besonders für hochgesättigte Traktionsmaschinen in automobilen Anwendungen gilt. Die Ableitung erster Ordnung kann folglich - wie zuvor beschrieben - als Lookup-Tabelle gespeichert sein oder durch ein Polynom in Abhängigkeit der gemittelten dq-Komponenten des Ist-Ausgangsstroms $i_{dq,mean}$ beschrieben werden.

Durch die Berücksichtigung der aktuellen gemittelten dq-Komponenten des Ist-Ausgangsstroms $i_{dq,mean}$ können so auch Änderungen der Induktivitäten, die bei herkömmlichen Verfahren vernachlässigt werden, berücksichtigt werden. Gerade bei hochgesättigten Maschinen hat eine von der Temperatur der Permanentmagneten 6 abhängige Veränderung der d-Komponente des magnetisches Flusses einen starke Abhängigkeit von den dq-Komponenten des Ist-Ausgangsstroms, so dass deren Berücksichtigung zu einer signifikanten Erhöhung der Genauigkeit der Schätzung führt.

In einem letzten Schritt S9 wird der Stromrichter 3 in Abhängigkeit der Temperaturinformation 16 durch den in der ersten Zeitscheibe ausgeführten Teilprozess 17 gesteuert. Dabei werden die getakteten Schaltsignale für Schaltelemente der Leistungseinheit 8 in Abhängigkeit der Temperaturinformation 16 ermittelt, wobei bei einer hohen Temperatur der Permanentmagneten 6 eine Leistungsreduktion (Derating) erfolgt. Ist diese Leistungsreduktion nicht ausreichend, wird ein Schutz der Permanentmagneten 6 durch eine Absenkung der Drehzahl der elektrisch Maschine 2 eingeleitet. Dazu wird eine Meldung an ein übergelagertes Steuergerät (nicht gezeigt) des Fahrzeugs 1 ausgegeben. Das Steuergerät setzt dann eine Antriebsstranglimitierung (Drehzahlbegrenzung) um.

Gemäß weiteren Ausführungsbeispielen des Verfahren werden nur einer oder ein Teil die Teilprozesse 13, 14, 15 im ersten Prozess 19 und die anderen Teilprozesse als separate Prozesse durchgeführt. Ebenso können die Teilprozesse 12, 17 als separate Prozesse durchgeführt werden. Wesentlich ist dabei nur, dass die Zeitscheiben, in denen den Teilprozessen 12, 17 entsprechende Prozesse durchgeführt werden, häufiger aufgerufen werden als die Zeitscheiben, in denen den Teilprozessen 13, 14, 15 entsprechende Prozesse durchgeführt werden.

## Patentansprüche

1. Verfahren zum Betreiben eines Stromrichters (3) für eine permanenterregte elektrische Maschine (2), wobei eine Temperaturinformation (16), die eine Temperatur wenigstens eines Permanentmagneten (6) der elektrischen Maschine (2) beschreibt, mittels eines Beobachters in Abhängigkeit von Betriebsparametern der elektrischen Maschine (2) ermittelt und der Stromrichter (3) in Abhängigkeit der Temperaturinformation (16) gesteuert wird,

   wobei eine Recheneinrichtung (9), die Prozesse (18, 19) in Zeitscheiben verarbeitet, in einer ersten Zeitscheibe einen ersten Prozess (18) zum Erfassen von Parameterwerten (22) für das Ermitteln der Betriebsparameter und in einer zweiten Zeitscheibe, die seltener als die erste Zeitscheibe aufgerufen wird, einen zweiten Prozess (19), der die Temperaturinformation (16) ermittelt, ausführt, wobei die Parameterwerte (22) über eine Dauer eines Erfassungsdurchgangs, der eine oder mehrere elektrische oder mechanische Perioden der elektrischen Maschine (2) umfasst, erfasst werden,
   **dadurch gekennzeichnet, dass**
   die Parameterwerte (22) nur dann zur Ermittlung der Betriebsparameter verwendet werden, wenn ein Validierungskriterium, das das Vorliegen eines quasistationären Betriebs der elektrischen Maschine (2) beschreibt, erfüllt ist und bei Nichterfüllung des Validierungskriteriums ein neuer Erfassungsdurchgang durchgeführt wird.

2. Verfahren nach Anspruch 1, wobei durch den ersten Prozess (18) auch getaktete Schaltsignale für die Steuerung des Stromrichters (3) erzeugt werden.

3. Verfahren nach Anspruch 1 oder 2, wobei Mittelwerte der Parameterwerte (22) über die Dauer des Erfassungsdurchgangs zur Ermittlung der Betriebsparameter berechnet werden.

4. Verfahren nach einem der vorhergehenden Ansprüche, wobei das Validierungskriterium eine Bedingung, dass eine Änderung von Soll-Strömen des Stromrichters innerhalb eines vorgegebenen Bereichs liegt, und/oder eine Bedingung, dass eine Änderung einer Drehzahl der elektrischen Maschine (2) in einem vorgegebenen Bereich liegt, umfasst.

**5.** Verfahren nach einem der vorhergehenden Ansprüche, wobei das Berechnen der Mittelwerte und/oder ein Auswerten des Validierungskriteriums durch den zweiten Prozess (19) oder durch einen in einer Zeitscheibe, die seltener als die erste Zeitscheibe aufgerufen wird, durchgeführten Prozess erfolgt.

**6.** Verfahren nach einem der vorhergehenden Ansprüche, wobei das Erfassen der Parameterwerte (22) durch eine Triggerinformation (21) gestartet wird, die nur dann bereitgestellt wird, wenn eine Startinformation (20) vorliegt, die anzeigt, dass eine Drehzahl der elektrische Maschine (2) größer oder gleich einem vorgegebenen Schwellwert ist, und/oder das Ermitteln der Betriebsparameter durch eine Triggerinformation (24) gestartet wird, die nur dann bereitgestellt wird, wenn der erste Prozess (18) eine Fertiginformation (23) bereitstellt, und/oder das Ermitteln der Temperaturinformation (16) durch eine Triggerinformation (27) gestartet wird, die nur dann bereitgestellt wird, wenn der Prozess (19), durch den die Betriebsparameter berechnet werden, eine Validierungsinformation (26) bereitstellt.

**7.** Verfahren nach Anspruch 6, wobei das Erzeugen der Triggerinformation oder der Triggerinformationen (21, 24, 27) durch den zweiten Prozess (18) oder durch einen in einer Zeitscheibe, die seltener als die erste Zeitscheibe aufgerufen wird, durchgeführten Prozess gesteuert wird.

**8.** Verfahren nach Anspruch 6 oder 7, wobei der die Triggerinformation oder die Triggerinformationen (21, 24, 27) erzeugende Prozess (18) einen Zustandsautomaten realisiert, der die Startinformation (20) und/oder die Fertiginformation (23) und/oder die Validierungsinformation (26) als Eingangsaktion erhält.

**9.** Verfahren nach einem der vorhergehenden Ansprüche, wobei beim Ermitteln der Temperaturinformation (16) eine zu einer Referenztemperatur zu addierende Temperaturdifferenz in Abhängigkeit eines Betriebsparameters, insbesondere von Ist-Ausgangsströmen des Stromrichters (3), aus einer magnetischen Flussdifferenz ermittelt wird.

**10.** Stromrichter (3) für eine permanenterregte elektrische Maschine (2), umfassend eine Recheneinrichtung (9), die zum Durchführen eines Verfahrens nach einem der Ansprüche 1 bis 9 eingerichtet ist.

**11.** Fahrzeug (1), umfassend eine permanenterregte elektrische Maschine (2) zum Antreiben des Fahrzeugs (1) und einen Stromrichter (3) nach Anspruch 10, der zum Versorgen der elektrischen Maschine (2) eingerichtet ist.

**12.** Computerprogramm zum Laden in einen Speicher (11) einer Recheneinrichtung (9), umfassend Softwarecode, mit dem ein Verfahren nach einem der Ansprüche 1 bis 9 durchgeführt wird, wenn das Computerprogramm auf der Recheneinrichtung (9) ausgeführt wird.

**Claims**

**1.** Method for operating a power converter (3) for a permanently excited electric machine (2), wherein an observer uses operating parameters of the electric machine (2) as a basis for ascertaining temperature information (16) describing a temperature of at least one permanent magnet (6) of the electric machine (2) and the temperature information (16) is used as a basis for controlling the power converter (3), wherein a computing device (9) processing processes (18, 19) in time slices performs, in a first time slice, a first process (18) for measuring parameter values (22) for ascertaining the operating parameters and, in a second time slice which is called less often than the first time slice, performs a second process (19) which ascertains the temperature information (16), wherein the parameter values (22) are measured over a duration of a measuring pass comprising one or more electrical or mechanical periods of the electric machine (2), **characterized in that** the parameter values (22) are only used for ascertaining the operating parameters if a validation criterion describing the presence of quasi-steady-state operation of the electric machine (2) is met, and if the validation criterion is not met a new measuring pass is carried out.

**2.** Method according to Claim 1, wherein the first process (18) also generates clocked switching signals for controlling the power converter (3).

**3.** Method according to Claim 1 or 2, wherein mean values of the parameter values (22) are calculated over the duration of the measuring pass for ascertaining the operating parameters.

**4.** Method according to one of the preceding claims, wherein the validation criterion comprises a condition that a change of setpoint currents of the power converter is within a predefined range, and/or a condition that a change in a rotational speed of the electric machine (2) is in a predefined range.

5. Method according to one of the preceding claims, wherein the mean values are calculated and/or the validation criterion is evaluated by the second process (19) or by a process carried out in a time slice which is called less often than the first time slice.

6. Method according to one of the preceding claims, wherein the measurement of the parameter values (22) is started by trigger information (21) which is only provided if there is start information (20) indicating that a rotational speed of the electric machine (2) is greater than or equal to a predefined threshold value, and/or the ascertainment of the operating parameters is started by trigger information (24) which is only provided if the first process (18) provides finish information (23), and/or the ascertainment of the temperature information (16) is started by trigger information (27) which is only provided if the process (19) used to calculate the operating parameters provides validation information (26).

7. Method according to Claim 6, wherein the generation of the one or more items of trigger information (21, 24, 27) is controlled by the second process (18) or by a process carried out in a time slice which is called less often than the first time slice.

8. Method according to Claim 6 or 7, wherein the process (18) generating the one or more items of trigger information (21, 24, 27) realizes a state machine which receives the start information (20) and/or the finish information (23) and/or the validation information (26) as an input action.

9. Method according to one of the preceding claims, wherein, when ascertaining the temperature information (16), a temperature difference that is to be added to a reference temperature is ascertained from a magnetic flux difference on the basis of an operating parameter, in particular of actual output currents of the power converter (3).

10. Power converter (3) for a permanently excited electric machine (2), comprising a computing device (9) which is configured to carry out a method according to one of Claims 1 to 9.

11. Vehicle (1), comprising a permanently excited electric machine (2) for driving the vehicle (1), and a power converter (3) according to Claim 10 which is configured to supply power to the electric machine (2).

12. Computer program to be loaded into a memory (11) of a computing device (9), comprising software code which is used to carry out a method according to one of Claims 1 to 9 when the computer program is executed on the computing device (9).

**Revendications**

1. Procédé destiné à faire fonctionner un convertisseur (3) pour une machine électrique (2) à excitation permanente, une information de température (16) qui décrit une température d'au moins un aimant permanent (6) de la machine électrique (2) étant déterminée au moyen d'un observateur en fonction de paramètres de fonctionnement de la machine électrique (2) et le convertisseur (3) étant commandé en fonction de l'information de température (16),

dans lequel un équipement de calcul (9) qui traite des processus (18, 19) dans des tranches de temps, exécute, dans une première tranche de temps, un premier processus (18) destiné à détecter des valeurs de paramètres (22) permettant de déterminer les paramètres de fonctionnement et, dans une deuxième tranche de temps qui est appelée moins fréquemment que la première tranche de temps, un deuxième processus (19) qui détermine l'information de température (16), les valeurs de paramètres (22) étant détectées au cours d'une durée d'un cycle de détection comprenant une ou plusieurs périodes électriques ou mécaniques de la machine électrique (2),
**caractérisé en ce que** les valeurs de paramètres (22) ne sont utilisées pour déterminer les paramètres de fonctionnement que lorsqu'un critère de validation qui décrit la présence d'un fonctionnement quasistationnaire de la machine électrique (2) est satisfait et, si le critère de validation n'est pas satisfait, un nouveau cycle de détection est exécuté.

2. Procédé selon la revendication 1, dans lequel des signaux de commutation cadencés pour la commande du convertisseur (3) sont également générés par le premier processus (18).

3. Procédé selon la revendication 1 ou 2, dans lequel des valeurs moyennes des valeurs de paramètres (22) sont calculées au cours de la durée du cycle de détection pour déterminer les paramètres de fonctionnement.

**4.** Procédé selon l'une des revendications précédentes, dans lequel le critère de validation comprend une condition selon laquelle une variation de courants de consigne du convertisseur se situe dans une plage prédéterminée et/ou une condition selon laquelle une variation d'une vitesse de rotation de la machine électrique (2) se situe dans une plage prédéterminée.

**5.** Procédé selon l'une des revendications précédentes, dans lequel le calcul des valeurs moyennes et/ou une évaluation du critère de validation s'effectue au moyen du deuxième processus (19) ou d'un processus mis en œuvre dans une tranche de temps appelée moins fréquemment que la première tranche de temps.

**6.** Procédé selon l'une des revendications précédentes, dans lequel la détection des valeurs de paramètres (22) est lancée par une information de déclenchement (21) qui n'est fournie que lorsqu'il existe une information de lancement (20) qui indique qu'une vitesse de rotation de la machine électrique (2) est supérieure ou égale à une valeur de seuil prédéterminée, et/ou la détermination des paramètres de fonctionnement est lancée par une information de déclenchement (24) qui n'est fournie que lorsque le premier processus (18) fournit une information de fin (23), et/ou la détermination de l'information de température (16) est lancée par une information de déclenchement (27) qui n'est fournie que lorsque le processus (19) par lequel les paramètres de fonctionnement sont calculés fournit une information de validation (26).

**7.** Procédé selon la revendication 6, dans lequel la génération de l'information de déclenchement ou des informations de déclenchement (21, 24, 27) est commandée par le deuxième processus (18) ou par un processus exécuté dans une tranche de temps qui est appelée moins fréquemment que la première tranche de temps.

**8.** Procédé selon la revendication 6 ou 7, dans lequel le processus (18) générant l'information de déclenchement ou les informations de déclenchement (21, 24, 27) met en œuvre un automate fini qui reçoit l'information de début (20) et/ou l'information de fin (23) et/ou l'information de validation (26) en tant qu'action d'entrée.

**9.** Procédé selon l'une des revendications précédentes, dans lequel, lors de la détermination de l'information de température (16), une différence de température à ajouter à une température de référence est déterminée en fonction d'un paramètre de fonctionnement, notamment de courants de sortie réels du convertisseur (3), à partir d'une différence de flux magnétique.

**10.** Convertisseur (3) destiné à une machine électrique (2) à excitation permanente, comprenant un équipement de calcul (9) qui est conçu pour mettre en œuvre un procédé selon l'une des revendications 1 à 9.

**11.** Véhicule (1) comprenant une machine électrique (2) à excitation permanente destinée à propulser le véhicule (1) et un convertisseur (3) selon la revendication 10, qui est conçu pour alimenter la machine électrique (2).

**12.** Programme informatique destiné à être chargé dans une mémoire (11) d'un équipement informatique (9), comprenant un code logiciel au moyen duquel un procédé selon l'une des revendications 1 à 9 est mis en œuvre lorsque le programme informatique est exécuté sur le dispositif informatique (9).

# Fig. 1

EP 3 794 724 B1

# Fig. 2

**Fig. 3**

EP 3 794 724 B1

# Fig. 4

**IN DER BESCHREIBUNG AUFGEFÜHRTE DOKUMENTE**

**In der Beschreibung aufgeführte Patentdokumente**

- DE 3736303 A1
- DE 102014109677 A
- DE 102015005555 A1

**In der Beschreibung aufgeführte Nicht-Patentliteratur**

- Determination of rotor temperature for an interior permanent magnet synchronous machine using a precise flux oberserver. **SPECHT, ANDREAS et al.** International Power Electronics Conference (IPEC-Hiroshima 2014, ECCE ASIA). 2014, 1501-1507